# EUROPEAN PATENT SPECIFICATION

(11) **EP 0 777 759 B1**
(45) Date of publication and mention of the grant of the patent: **31.03.1999**
(21) Application number: 95928915.8
(22) Date of filing: 28.08.1995
(51) Int. Cl.: C23C 4/12, B22F 1/00

(54) **SUSPENSION PLASMA SPRAY DEPOSITION**
SUSPENSION PLASMABESCHICHTUNG
DEPOSITION PAR PROJECTION EN PHASE PLASMATIQUE D'UNE SUSPENSION

(30) Priority: 26.08.1994 US 296674
(43) Date of publication of application: 11.06.1997
(73) Proprietor: Université de Sherbrooke, Sherbrooke Québec, J1K 2R1 (CA)
(72) Inventor: GITZHOFER, François, Sherbrooke, Quebec J1L 1J6 (CA); BOUYER, Etienne, Sherbrooke, Quebec J1K 1Z3 (CA); BOULOS, Maher, I., Sherbrooke, Quebec J1L 1H2 (CA)
(74) Representative: Dubois-Chabert, Guy
(86) International application number: PCT/CA95/00493
(87) International publication number: WO 96/06957

(56) References cited:
- EP-A- 0 407 698
- CH-A- 109 713
- FR-A- 2 690 638
- GB-A- 851 594
- GB-A- 1 151 423
- GB-A- 1 321 481
- US-A- 3 187 717
- US-A- 4 853 250
- PATENT ABSTRACTS OF JAPAN vol. 10 no. 355 (C-388) ,29 November 1986 & JP,A,61 155295 (SHOWA DENKO) 14 July 1986,
- PATENT ABSTRACTS OF JAPAN vol. 14 no. 492 (C-0773) ,26 October 1990 & JP,A,02 203853 (KOBE STEEL) 13 August 1990,

## Description

### BACKGROUND OF THE INVENTION

### 1. Field of the invention:

The present invention relates to a plasma spray deposition method for producing a material deposit onto a substrate. The plasma deposition method may be used either to produce a protective coating of the substrate or to form a near net shape body on this substrate. More particularly, the present invention relates to a plasma spray deposition method in which the material to be deposited is supplied in the form of a suspension including solid particles of the material dispersed into a liquid or semi-liquid carrier substance.

The present invention further relates to a method using the same technique for producing a powder of a given material from a suspension of that material.

### 2. Brief description of the prior art:

Plasma deposition of particulate materials, in particular ceramic and metallic powders, has been known and used on an industrial scale since the late 60's and early 70's.

However, the conventional plasma deposition methods using particulate materials such as ceramic and metallic powders have many drawbacks essentially related to the production of these powders. Indeed, powders having a high added value are generally chemically synthesized using precipitation or co-precipitation processes. Obtention of powders having adequate particle size distribution from these precipitates require many lengthy steps likely to introduce impurities in the powders. Obviously, these impurities degrade the properties of the powders.

For example, to produce hydroxyapatite (HAP) which is a bioceramic material having a chemical composition similar to that of human hard tissues (bones and teeth), calcium hydroxide is reacted with phosphoric acid to obtain a gel precipitate which is transformed into powder by means of the following steps:
- drying at 180 °C;
- calcination at 800 °C;
- sintering at 1150 °C;
- crushing; and
- screening.

The product obtained from the screening step is a powder that can be deposited by known plasma deposition methods, usually involving a carrier gas to carry the powder to the plasma discharge.

Since HAP is a material used for coating implants, impurities is likely to cause biocompatibility problems.

Another important drawback of the plasma deposition of particulate materials injected in the plasma discharge by means of a carrier gas is the possible partial decomposition of the powder under the influence of the high temperature of the plasma discharge. The degree of decomposition depends on the plasma composition and the contact time.

In an attempt to overcome these drawbacks, it has been proposed to replace the powder by an aqueous solution of the material to be deposited (U.S. patent N° 5,032,568 granted to Lau et al. on July 16, 1991). In this patent, metal salts are dissolved in water and the resulting aqueous solution is atomized and then injected into an inductively coupled radio-frequency plasma torch where it is vaporized to form on a target surface a film comprising a mixed oxide of the dissolved metal ions.

Applicability of the method of Lau et al. is limited since many materials to be deposited on a substrate cannot be dissolved in water or other liquid. Another drawback of the method of Lau et al. is that vaporisation of the dissolved material being deposited may lead to changes in the properties of the deposit. Finally, vapour deposition is very slow.

Document GB-A-1 321 481 discloses spraying of a plastic material with a plasma spray gun to produce a cohesive coating on an article. The plastic material is fed to the plasma gun in dry powder form or in particulate form dispersed in a liquid. In both cases, the plastic material must be mixed with a metal or a ceramic powdery The type of plasma gun being used is not indicated; this is only suggested to inject the mixture into the plasma as a uniform stream.

Document GB-A-851 594 discloses a method of spraying metals or other solid materials by feeding the material to be sprayed to a spray producing station in the form of a pasty rod and acting on such rod at the spray producing station with a spray producing gaseous propellant and with heating means. To form a rod, the material can be mixed with a suitable paste forming binder. The spraying apparatus comprises a nozzle having at least one duct through which can be supplied a gaseous spray producing propellant adapted to act on the material to be sprayed.

Document FR-A-2 690 638 discloses a method of producing powder in a dense spherical particulate form by injecting a mixture of agglomerated particles of a given material in a plasma stream. The mixture is injected in the plasma at a relatively low speed to obtain a sufficiently long residence time in the plasma. This sufficiently long residence time along with the high temperature of the plasma gas ensure that the external surfaces of the particles melts. The mixture is injected in the plasma in a region where the temperature is uniform. The particles are injected in the plasma in a vortex stream.

### OBJECTS OF THE INVENTION

An object of the present invention is therefore to overcome the above discussed drawbacks of the conventional plasma deposition methods by using a suspension of particles of the material to be deposited in a liquid or semi-liquid carrier substance.

Another object of the present invention is to provide a plasma spray method for producing a powder of a given material from a suspension of that material.

### SUMMARY OF THE INVENTION

More specifically, in accordance with the present invention, there is provided a plasma spray method for agglomerating solid particle of a given material into at least partially melted drops, as disclosed in claim 1.

The plasma deposition method of the invention may be used either to produce a protective coating of the substrate or to form a near net shape body on the substrate.

In accordance with a further aspect of the present invention, there is provided an atomizing probe for carrying out the atomizing and injecting steps of the plasma spray deposition method according to the invention. This atomizing probe comprises:
an inner conduit member having a first end and a second discharge end, and being supplied with the suspension at the first end thereof; and
an outer conduit member surrounding the inner conduit member to define an annular chamber between the inner and outer conduit members, the outer conduit member having a first end and a second end adjacent the second discharge end of the inner conduit member, and the annular chamber being supplied with a pressurized atomizing gas at the first end of the outer conduit member.

### BRIEF DESCRIPTION OF THE DRAWINGS

In the appended drawings:
Figure 1 is a schematic diagram of a plasma spray torch in accordance with the present invention, for producing material deposits or for producing material powders from material suspensions; and
Figure 2 is a schematic diagram of a probe for atomizing the suspension within the plasma discharge of the torch of Figure 1.

### DETAILED DESCRIPTION OF THE PREFERRED EMBODIMENT

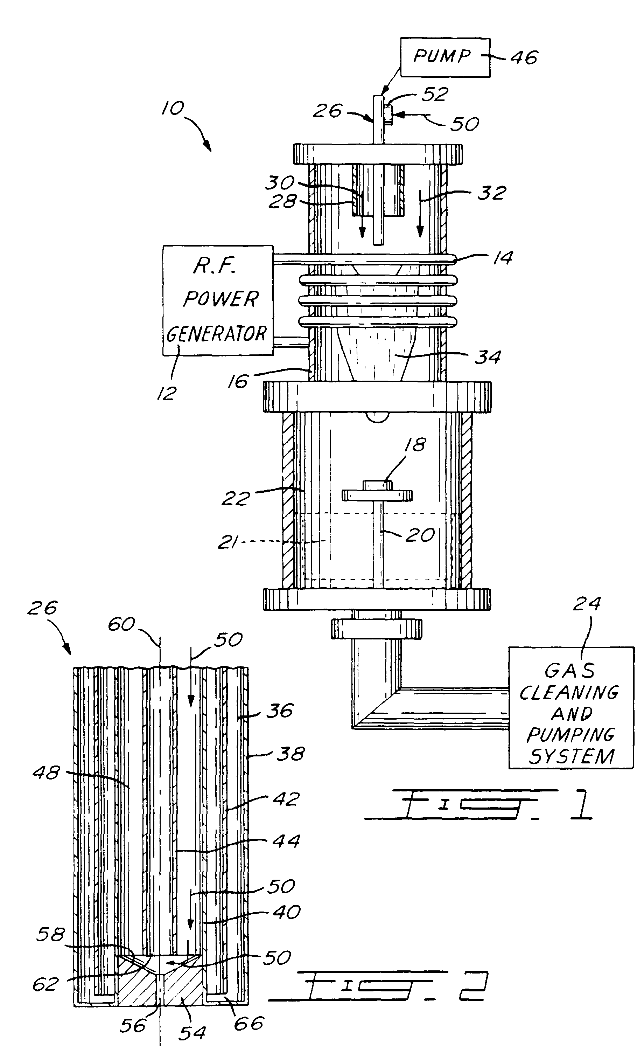

Referring to Figure 1, an inductively coupled radio-frequency (RF) plasma torch 10 is schematically illustrated.

Since inductively coupled RF plasma torches are well known to those of ordinary skill in the art, the description of the plasma torch 10 will be succinct. The plasma torch 10 includes a RF power generator 12 supplying a RF current to an induction coil 14 wound around a plasma confinement tube 16, confining the plasma discharge 34. A substrate 18 on which the plasma sprayed material is to be deposited is placed on a support 20, advantageously capable of rotating and translating to produce a more uniform deposit layer. Support 20 is enclosed in a reactor 22 held at atmosphere or low pressure. The exhaust gases pass through a gas cleaning and pumping system 24 prior to being released in the atmosphere.

An atomizing probe 26 is centrally mounted in the confinement tube 16 and an intermediate quartz tube 28, having a smaller diameter than the confinement tube 16, is interposed between the probe 26 and the confinement tube 16. A central gas (see arrow 30) is injected in the quartz tube 28, and a sheath gas (see arrow 32) is injected in the annular passage defined between the quartz tube 28 and the plasma confinement tube 16.

The atomizing probe 26 will now be further described with reference to Figure 2. The probe 26 is cooled by a cooling fluid flowing in an annular chamber 36 centered on the longitudinal axis 60 of the probe 26. The chamber 36 is delimited by an outer cylindrical tube 38 and an inner cylindrical tube 40, and comprises an intermediate cylindrical tube 42 interposed between the outer tube 38 and the inner tube 40 to separate a cooling fluid inlet (not shown) and a cooling fluid outlet (not shown). The intermediate tube 42 leaves an annular passage 66 at the lower end of the probe 26 to ensure proper flow of cooling fluid from the cooling fluid inlet to the cooling fluid outlet, to efficiently cool the probe 26.

The atomizing probe 26 also includes a cylindrical, suspension injection tube 44 centered on the longitudinal axis 60 and therefore coaxial with the annular chamber 36. A pump 46 (Figure 1) supplies the injection tube 44 with a suspension of the material to be plasma sprayed.

Between the injection tube 44 and the inner tube 40 is defined an annular chamber 48 supplied with an atomizing gas (see arrow 50) through a gas inlet 52 (Figure 1). The function of the gas 50 is to atomize the suspension supplied to the injection tube 44 as will be described hereinafter.

Probe 26 further comprises a thick circular disk 54 having a central opening 56 centered on the axis 60 and therefore in alignment with the tube 44. The top surface 58 of disk 54 defines a conical inner end wall of the cylindrical tube 40 spaced apart from the suspension discharge end 62 of tube 44 and converging toward the central opening 56; the conical end wall 58 defines a slope toward opening 56.

Having described the various components forming the preferred embodiment of the present invention, attention will now be given to the operation of the atomizing probe 26 and plasma torch 10.

The probe 26 atomizes the suspension supplied through the injection tube 44 into a stream of fine droplets and injects this stream of droplets generally centrally of the plasma discharge 34. More specifically, when the gas 50 flowing downwardly through the annular chamber 48 reaches the conical inner end wall 58, the gas flow is deflected to become angular to the suspension flow from the discharge end 62 of the tube 44. The suspension is then sheared and thereby atomized, and injected in the plasma discharge 34 under the form of fine droplets through the opening 56.

Although a specific atomizing probe 26 has been described hereinabove, the present invention is not limited to the use of this probe and alternative atomizing processes are available to shear the suspension.

The stream of fine droplets travels through the plasma discharge 34 to reach the substrate 18. As the droplets of suspension travel from the opening 56 to the substrate 18, these droplets are subjected to several physicochemical transformations. It should be pointed out here that the suspension is composed of small solid particles suspended and dispersed into a solvent or other liquid or semi-liquid carrier substance. When the fine droplets of suspension reach the plasma discharge 34, the solvent first evaporates and the vapour thus formed decomposes under the extreme heat of the plasma. The remaining aerosol of small solid particles then agglomerate into drops which are either totally or partially melted, and/or vaporized.

The plasma discharge 34 accelerates the molten drops, which accumulate kinetic energy. Carried by this kinetic energy, the drops hit the substrate 18. The plurality of drops form, on the substrate 18, a layer of partially or totally melted drops partially overlapping one another.

It should be pointed out here that the suspension to be plasma sprayed, containing often more than 40% of dry matter, is mixed with an organic salt acting as deflocculant to prevent agglomeration of the solid matter in the suspension prior to the atomization and to reduce the viscosity of the suspension.

It should also be pointed out that the RF plasma torch could be replaced by a DC plasma torch (not in accordance with the invention). However, if a DC plasma torch is used, impurities may be added to the drops of solid aerosol particles since, as well known to those of ordinary skill in the art, the electrodes of a DC plasma torch are subjected to erosion. An advantage of RF plasma torches is that they allow use of different types of plasma gases, since oxidizing or reducing gases can be used without risks. Also, the relatively low speeds of the gases (30 m/s) and the relatively large volume of the RF plasma torch (100 cm³) produce contact times between the droplets and the plasma 34 sufficiently long to evaporate the solvent and melt the drops of solid aerosol particles. The relatively low temperature (10 000 °K) combined with the long contact time between the plasma and the drops minimize the risks of overheating, decomposition and vaporization of the drops.

The main advantage of the technique in accordance with the invention is the abolition of the long sequence of steps involved in the preparation of the plasma sprayed powder from a suspension. Indeed, conventional plasma deposition techniques require powder injected in the plasma jet 34 by means of a carrier gas. The technique of the present invention eliminates the numerous, complex and time consuming steps involved in the preparation of a costly powder by atomizing the suspension directly in the plasma.

The technique of the present invention also increases the rate of deposition. When a suspension is used, the rate of deposition may be as high as 20 µm/minute. For the purpose of comparison, if a solution is used instead of a suspension, the rate of deposition is as low as 10 µm/hour.

It should also be pointed out that when water is used as the carrier substance of the suspension, the generated water vapour contributes to raise the water partial pressure in the plasma discharge which may prevent the decomposition of the aerosol particles during the melting step and may promote the formation of crystalline networks in the deposit produced.

Finally, it is possible to replace the substrate 18 and support 20 by a vessel 21 (shown in dashed lines in Figure 1) placed on the bottom of the reactor 22 to produce a powder directly from a suspension. Those skilled in the art will appreciate that the distance between the plasma discharge 34 and the vessel 21 must be sufficient to allow the partially melted drops to solidify in-flight before they reach the bottom of that vessel 21. Alternatively, devices (not shown) for accelerating solidification of the drops can be used. The produced powder is collected in the vessel 21 and can subsequently be plasma sprayed using conventional techniques. This plasma spray powder producing method therefore eliminates the numerous, complex and time consuming steps involved in the conventional methods of preparing powders to be plasma sprayed.

### EXAMPLE

Experiments have been conducted in view of depositing a bioceramic, the hydroxyapatite (HAP), with the technique as described hereinabove and using an experimental set-up generally represented in Figure 1.

HAP is a material having a composition similar to that of the mineral part of human hard tissues (bones, teeth). HAP is also biocompatible. It is possible to form structural monolithic HAP, but since the mechanical resistance of this ceramic is poor, it is not possible to use it as orthopaedic implants.

Many techniques have been recently developed to provide a bioceramic coating or deposit to a metallic structure. The metallic structure is relatively easy to form and provides a good mechanical resistance to the implant. Plasma deposition offers advantages for the deposition of HAP over the metallic structure since the crystallographic structure and the chemical properties of the HAP deposit may be preserved.

The HAP is usually synthesized using wet chemistry through the reaction of calcium hydroxide with phosphoric acid according to the chemical reaction: ${\text{10Ca(OH)}}_{\text{2}} {\text{+ 6H}}_{\text{3}} {\text{PO}}_{\text{4}} {\text{→ Ca}}_{\text{10}} {\text{(PO}}_{\text{4}} {\text{)}}_{\text{6}} {\text{(OH)}}_{\text{2}} {\text{+ 18H}}_{\text{2}} \text{O}$

Conventionally, the white gel precipitate formed is filtered and washed before being spray dried in the form of a coarse powder. The latter powder is then calcined under a controlled atmosphere, crushed and classified to obtain a powder with the required particle size distribution. Since the resulting material is destined to biomedical applications, each of these steps have to be carried out with considerable care to avoid contamination which may be harmful to the human body.

The stringent requirements on purity and particle size distribution of the powder are responsible for the relatively high cost of the material.

The conventional deposition technique involves the injection of the powder using a carrier gas into the plasma flow. The powder is heated and melted, in flight, in a relatively short time (milliseconds). The molten droplets are entrained by the plasma flow and projected against the substrate on which they solidify, forming a thin deposit having a thickness of a few hundred micrometers. The deposit, which is formed by successive splattering of individual molten droplets, usually constitutes a mixture of amorphous and crystalline materials depending on the substrate temperature and the cooling rate of the individual droplets on impact with the substrate.

As the powder is deposited by plasma deposition, it may suffer serious degradation due to its partial decomposition under the influence of the high temperature of the plasma. The degree of degradation depends to a large extent on the plasma composition and the contact time between the plasma and the powder.

As mentioned in the foregoing description, if the plasma torch used is a DC plasma torch (not in accordance with the invention), erosion of the electrodes may be responsible for further contamination of the deposit by the vaporized and/or sputtered electrode material, usually copper and tungsten which may find its way to the deposit.

With the technique of the present invention, it is possible to achieve a substantial reduction of the steps involved in the production of HAP deposit, and consequently reduce the cost and potential contamination of the deposit. Indeed, with the novel technique described herein, it is possible to plasma spray an HAP suspension, without having to reducing it to powder beforehand, by direct injection of an aqueous suspension of the HAP slurry (formed of HAP gel in water) centrally of the plasma discharge 34.

The experimental set-up (Figure 1) is based on a inductively coupled RF plasma torch having a nominal power of 50 kW and an oscillating frequency of 3 MHz, associated with a reactor operating at low pressures. The suspension supply pump 46 (Figure 1) is a peristaltic pump.

To achieve the injection of the HAP suspension directly in the center of the plasma discharge, the white gel resulting from the chemical reaction described above is decanted to increase the content of dry matter up to 40% by weight. A deflocculant is then added to decrease the viscosity of the gel and thus allowing this gel to be brought to the center of the plasma 34 through the injection tube 44.

The HAP suspension is atomized into a stream of fine droplets and is injected into the plasma as described hereinabove. The droplets are dried in flight, calcined and melted in a single step. The droplets agglomerate to form drops of partially or totally melted HAP. The molten drops of HAP are then deposited on the substrate 18 to form a hard and dense HAP deposit.

Operating in an atmosphere with a high partial pressure of water vapour presents the added advantage that transformation of HAP from an amorphous form into a crystalline one during the plasma spray deposition process is promoted by the presence of water vapour. Therefore a post-treatment in view of increasing the crystallinity of the deposit is no longer required. Furthermore, the rate of deposition of HAP is higher with the present invention than with the conventional techniques involving powders.

As it will be understood by those of ordinary skill in the art of plasma deposition, the above discussed example describing the plasma spray deposition of a suspension of hydroxyapatite using an inductively coupled RF plasma torch is not to be taken as a limitation of the type of material having the possibility of being plasma sprayed according to the present method.

Also, as mentioned in the foregoing description, the plasma deposition method of the invention is suitable to either produce a protective coating of the substrate or form a near net shape body on that substrate.

Finally, when the substrate 18 and support 20 are replaced by the vessel 21 as described hereinabove, HAP powder can be easily produced and collected in vessel 21 to thereby eliminate the numerous, complex and time consuming steps involved in the conventional methods of preparing HAP powder thus substantially reducing the costs of production and the risks of contamination of the powder. This is made, as described hereinabove, by solidifying the partially melted drops of HAP from the plasma discharge and collecting these drops into the vessel 21.

Although the present invention has been described hereinabove by way of a preferred embodiment thereof, this embodiment can be modified at will without departing from the nature of the subject invention, as defined by the appended claims.

## Claims

1. A plasma spray method for agglomerating solid particles of a given material into at least partially melted drops, characterized in that it comprises the steps of:
producing an inductively coupled RF plasma discharge (34) ;
providing a suspension of said material, said suspension comprising small solid particles of said material dispersed into a liquid or semi-liquid carrier substance ;
atomizing said suspension into a stream of fine droplets and injecting said stream of fine droplets generally centrally of the plasma discharge (34); and
by means of the plasma discharge, (a) vaporizing said carrier substance, and (b) agglomerating the small solid particles into said at least partially melted drops.

2. A plasma spray method as defined in claim 1, characterized in that it further comprises the steps of, by means of the plasma discharge, accelerating said drops and projecting the accelerated drops onto a substrate (18) to form a material deposit.

3. A plasma spray method as defined in claim 2, characterized in that it further comprises the step of forming with said material deposit a coating on said substrate (18).

4. A plasma spray method as defined in claim 2, characterized in that it comprises forming with said material deposit a near net shape body on the substrate (18).

5. A plasma spray method as defined in claim 1, characterized in that the step of providing a suspension of the material comprises:
conducting a chemical reaction in order to obtain a precipitate of said material in suspension in said liquid or semi-liquid carrier substance;
decanting the suspension to increase the concentration of said material;
adding a defloculent to reduce the viscosity of the suspension; and
pumping the suspension to an atomizing probe (26) for atomizing the suspension into said stream of droplets.

6. A plasma spray method as defined in claim 5, characterized in that said chemical reaction conducting step comprises conducting a chemical reaction between calcium hydroxide and phosphoric acid.

7. A plasma spray method as defined in claim 6, characterized in that said material comprises hydroxyapatite, and wherein said carrier substance comprises water.

8. A plasma spray method as defined in claim 1, characterized in that said material comprises hydroxyapatite, and wherein said carrier substance comprises water.

9. A plasma spray method as defined in claim 1, characterized in that atomizing of said suspension comprises:
supplying said suspension through a conduit member (44) having a discharge end (62); and
shearing the suspension at the discharge end (62) of said conduit by means of a pressurized atomizing gas.

10. A plasma spray method as recited in claim 1, characterized in that it comprises the step of solidifying said drops in-flight to form a powder of said material.

11. A plasma spray method as recited in claim 1, characterized in that said agglomerating step involve physicochemical transformations of said droplets.

12. A plasma spray method as recited in claim 1, characterized in that the RF plasma discharge (34) includes plasma gases moving at a speed of 30 m/s.

13. An atomizing probe for carrying out the atomizing and injecting step of the plasma spray method of claim 1, characterized in that it comprises:
an inner conduit member (44) having a first end and a second discharge end (62), and being supplied with said suspension at said first end thereof; and
an outer conduit member (40) surrounding said inner conduit member (44) to define an annular chamber (48) between said inner (44) and outer (40) conduit members, said outer conduit member (40) having a first end and a second end adjacent said second discharge end (62) of the inner conduit member (44), and said mmular chamber (48) being supplied with a pressurized atomizing gas (50) at said first end of the outer conduit member (40);
wherein said outer conduit member (40) compresses at said second end thereof an inner end wall (58) formed with a central opening (56) situated substantially in alignment with said inner conduit member (44), said inner end wall (58) being spaced apart from the second discharge end (62) of the inner conduit member (44) and said inner end wall (S8) converging toward said opening (56) whereby the pressurized gas (50) is deflected toward the suspension discharged from the second end (62) of the inner conduit member (44) to shear said suspension into a stream of fine droplets ejected from said probe (26) through said opening (56).

14. An atomizing probe as recited in claim 13, characterized in that said inner end wall (58) is conical.

## Patentansprüche

1. Plasmasprühverfahren zum Verkleben bzw. Agglomerieren fester Teilchen eines gegebenen Materials in zumindest teilweise geschmolzene Tropfen, dadurch gekennzeichnet, daß es die Schritte aufweist:
Erzeugen einer induktiv gekoppelten HF-Plasmaentladung (34) ;
Bereitstellen einer Suspension des Materials, wobei die Suspension kleine feste Teilchen des in eine flüssige oder halbflüssige Trägersubstanz dispergierten Materials aufweist;
Zerstäuben der Suspension in einen Strom feiner Tröpfchen und Injizieren des Stroms feiner Tröpfchen im wesentlichen in der Mitte der Plasmaentladung (34); und
durch die Plasmaentladung, (a) Verdampfen der Trägersubstanz und (b) Agglomerieren der kleinen festen Teilchen in die zumindest teilweise geschmolzenen Tropfen.

2. Plasmasprühverfahren nach Anspruch 1, dadurch gekennzeichnet, daß es ferner die Schritte aufweist:
Beschleunigen der Tropfen und Projizieren der beschleunigten Tropfen auf ein Substrat (18) durch die Plasmaentladung, um eine Materialablagerung zu bilden.

3. Plasmasprühverfahren nach Anspruch 2, dadurch gekennzeichnet, daß es ferner den Schritt eines Schaffens einer Beschichtung auf dem Substrat (18) mit der Materialablagerung aufweist.

4. Plasmasprühverfahren nach Anspruch 2, dadurch gekennzeichnet, daß es ein Bilden eines nahezu netzförmigen Korpus auf dem Substrat (18) mit der Materialablagerung aufweist.

5. Plasmasprühverfahren nach Anspruch 1, dadurch gekennzeichnet, daß der Schritt eines Bereitstellens einer Suspension des Materials aufweist:
ein Durchführen einer chemischen Reaktion, um einen Niederschlag des Materials in Suspension in der flüssigen oder halbflüssigen Trägersubstanz zu erhalten;
ein Dekantieren der Suspension, um die Konzentration des Materials zu erhöhen;
ein Hinzufügen eines Dispergiermitttels, um die Viskosität der Suspension zu reduzieren; und
ein Pumpen der Suspension zu einer Zerstäubungssonde (26) zum Zerstäuben der Suspension in den Strom von Tröpfchen.

6. Plasmasprühverfahren nach Anspruch 5, dadurch gekennzeichnet, daß der eine chemische Reaktion durchführende Schritt ein Durchführen einer chemischen Reaktion zwischen Kalziumhydroxid und Phosphorsäure umfaßt.

7. Plasmasprühverfahren nach Anspruch 6, dadurch gekennzeichnet, daß das Material Hydroxyapatit aufweist und worin die Trägersubstanz Wasser aufweist.

8. Plasmasprühverfahren nach Anspruch 1, dadurch gekennzeichnet, daß das Material Hydroxyapatit aufweist und worin die Trägersubstanz Wasser aufweist.

9. Plasmasprühverfahren nach Anspruch 1, dadurch gekennzeichnet, daß ein Zerstäuben der Suspension umfaßt:
ein Zuführen der Suspension durch ein Rohrleitungselement (44) mit einem Ausströmende (62); und
ein Scheren der Suspension am Ausströmende (62) der Rohrleitung durch ein unter Druck gesetztes Zerstäubungsgas.

10. Plasmasprühverfahren nach Anspruch 1, dadurch gekennzeichnet, daß es den Schritt eines Verfestigens der Tropfen im Flug aufweist, um ein Pulver des Materials zu bilden.

11. Plasmasprühverfahren nach Anspruch 1, dadurch gekennzeichnet, daß der agglomerierende Schritt physikochemische Umformungen der Tröpfchen beinhaltet.

12. Plasmasprühverfahren nach Anspruch 1, dadurch gekennzeichnet, daß die HF-Plasmaentladung (34) Plasmagase umfaßt, die sich mit einer Geschwindigkeit von 30 m/s bewegen.

13. Zerstäubungssonde zum Ausführen des Zerstäubungsund Injizierschritts des Plasmasprühverfahrens nach Anspruch 1, dadurch gekennzeichnet, daß sie aufweist:
ein inneres Rohrleitungselement (44), das ein erstes Ende und ein zweites Ausströmende (62) aufweist und mit der Suspension an seinem ersten Ende beschickt wird; und
ein äußeres Rohrleitungselement (40), das das innere Rohrleitungselement (44) umgibt, um eine ringförmige Kammer (48) zwischen dem inneren (44) und äußeren (40) Rohrleitungselement zu definieren, wobei das äußere Rohrleitungselement (40) ein erstes Ende und ein zweites Ende aufweist, das dem zweiten Ausströmende (62) des inneren Rohrleitungselements (44) benachbart ist, und die ringförmige Kammer (48) mit einem unter Druck gesetzten Zerstäubungsgas (50) am ersten Ende des äußeren Rohrleitungselements (40) beschickt wird;
worin das äußere Rohrleitungselement (40) an seinem zweiten Ende eine innere Endwand (58) aufweist, die mit einer zentralen Öffnung (56) ausgebildet ist, die im wesentlichen in Ausrichtung mit dem inneren Rohrleitungselement (44) angeordnet ist, wobei die innere Endwand (58) von dem zweiten Ausströmende (62) des inneren Rohrleitungselements (44) beabstandet ist und die innere Endwand (58) zur Öffnung (56) hin zusammenläuft, wodurch das unter Druck gesetzte Gas (50) in Richtung der aus dem zweiten Ende (62) des inneren Rohrleitungselements (44) ausgeströmten Suspension abgelenkt wird, um die Suspension in einen Strom aus der Sonde (26) durch die Öffnung (56) ausgestoßener feiner Tröpfchen zu scheren.

14. Zerstäubungssonde nach Anspruch 13, dadurch gekennzeichnet, daß die innere Endwand (58) konisch ist.

## Revendications

1. Procédé de projection en phase plasmatique pour agglomérer des particules solides d'un matériau donné en des gouttes fondues au moins en partie, caractérisé en ce qu'il comprend les étapes consistant à :
produire une décharge de plasma à haute fréquence à couplage inductif (34) ;
prévoir une suspension dudit matériau,
ladite suspension comprenant de petites particules solides dudit matériau dispersées dans une substance de support liquide ou semi-liquide ;
atomiser ladite suspension sous la forme d'un courant de fines gouttelettes et injecter ledit courant de fines gouttelettes globalement au centre de la décharge de plasma (34) ; et
au moyen de la décharge de plasma, (a) vaporiser ladite substance de support et (b) agglomérer les petites particules solides en lesdites gouttes fondues au moins en partie.

2. Procédé de projection en phase plasmatique selon la revendication 1, caractérisé en ce qu'il comprend en outre les étapes consistant à, au moyen de la décharge de plasma, accélérer lesdites gouttes et projeter les gouttes accélérées sur un substrat (18) afin de former un dépôt de matériau.

3. Procédé de projection en phase plasmatique selon la revendication 2, caractérisé en ce qu'il comprend en outre l'étape consistant à former avec ledit dépôt de matériau un revêtement sur ledit substrat (18).

4. Procédé de projection en phase plasmatique selon la revendication 2, caractérisé en ce qu'il comprend la formation avec ledit dépôt de matériau d'un corps de forme presque nette sur le substrat (18).

5. Procédé de projection en phase plasmatique selon la revendication 1, caractérisé en ce que l'étape consistant à prévoir une suspension du matériau comprend :
la réalisation d'une réaction chimique afin d'obtenir un précipité dudit matériau en suspension dans ladite substance de support liquide ou semi-liquide ;
la décantation de la suspension afin d'augmenter la concentration dudit matériau ;
l'ajout d'un défloculant afin de réduire la viscosité de la suspension ; et
le pompage de la suspension dans une sonde d'atomisation (26) pour atomiser la suspension sous la forme dudit courant de gouttelettes.

6. Procédé de projection en phase plasmatique selon la revendication 5, caractérisé en ce que ladite étape de réalisation de la réaction chimique comprend la réalisation d'une réaction chimique entre de l'hydroxyde de calcium et de l'acide phosphorique.

7. Procédé de projection en phase plasmatique selon la revendication 6, caractérisé en ce que ledit matériau comprend de l'hydroxyapatite et dans lequel ladite substance de support comprend de l'eau.

8. Procédé de projection en phase plasmatique selon la revendication 1, caractérisé en ce que ledit matériau comprend de l'hydroxyapatite et dans lequel ladite substance de support comprend de l'eau.

9. Procédé de projection en phase plasmatique selon la revendication 1, caractérisé en ce que l'atomisation de ladite suspension comprend les étapes consistant à :
délivrer ladite suspension par un élément formant conduit (44) présentant une extrémité de décharge (62) ; et
cisailler la suspension au niveau de l'extrémité de décharge (62) dudit conduit au moyen d'un gaz d'atomisation sous pression.

10. Procédé de projection en phase plasmatique selon la revendication 1, caractérisé en ce qu'il comprend l'étape de solidification desdites gouttes en vol afin de former une poudre dudit matériau.

11. Procédé de projection en phase plasmatique selon la revendication 1, caractérisé en ce que ladite étape d'agglomération implique des transformations physico-chimiques desdites gouttelettes.

12. Procédé de projection en phase plasmatique selon la revendication 1, caractérisé en ce que la décharge de plasma à haute fréquence (34) comprend des gaz de plasma circulant à une vitesse de 30 m/s.

13. Sonde d'atomisation pour réaliser l'étape d'atomisation et d'injection du procédé de projection en phase plasmatique selon la revendication 1, caractérisée en ce qu'elle comprend :
un élément formant conduit intérieur (44) présentant une première extrémité et une seconde extrémité de décharge (62) et étant alimenté avec ladite suspension au niveau de sa dite première extrémité ; et
un élément formant conduit extérieur (40) entourant ledit élément formant conduit intérieur (44) afin de définir une chambre annulaire (48) entre lesdits éléments formant conduit intérieur (44) et conduit extérieur (40), ledit élément formant conduit extérieur (40) présentant une première extrémité et une seconde extrémité adjacente à ladite seconde extrémité de décharge (62) de l'élément formant conduit intérieur (44), et ladite chambre annulaire (48) étant alimentée avec un gaz d'atomisation sous pression (50) au niveau de ladite première extrémité de l'élément formant conduit extérieur (40) ;
dans laquelle ledit élément formant conduit extérieur (40) comprend au niveau de sa dite seconde extrémité une paroi d'extrémité intérieure (58) formée d'une ouverture centrale (56) située sensiblement dans l'alignement avec ledit élément formant conduit intérieur (44), ladite paroi d'extrémité intérieure (58) étant séparée de la seconde extrémité de décharge (62) de l'élément formant conduit intérieur (44) et ladite paroi d'extrémité intérieure (58) convergeant vers ladite ouverture (56) si bien que le gaz sous pression (50) est dévié vers la suspension déchargée de la seconde extrémité (62) de l'élément formant conduit intérieur (44) afin de cisailler ladite suspension en un courant de fines gouttelettes éjectées de ladite sonde (26) par ladite ouverture (56).

14. Sonde d'atomisation selon la revendication 13, caractérisée en ce que ladite paroi d'extrémité intérieure (58) est conique.
